(19) Europäisches Patentamt
European Patent Office
Office européen des brevets

(11) **EP 2 309 386 A1**

(12) **EUROPEAN PATENT APPLICATION**

(43) Date of publication:
**13.04.2011 Bulletin 2011/15**

(51) Int Cl.:
***G06F 9/44*** *(2006.01)*

(21) Application number: **09275097.5**

(22) Date of filing: **06.10.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **ITI Scotland Limited**
**Glasgow G2 2LB (GB)**

(72) Inventors:
• **Finking, Robert**
**Glasgow G2 6HQ (GB)**

• **Finney, Alan**
**Glasgow G2 6HQ (GB)**

(74) Representative: **Exell, Jonathan Mark**
**Williams Powell**
**Staple Court**
**11 Staple Inn Buildings**
**London**
**WC1V 7QH (GB)**

(54) **Notation enhancement system, compiler and method**

(57)    A notation enhancement system and method are disclosed. The system comprises a parsing unit, a reasoning unit and a data repository. The data repository is arranged to store data on at least components of notations of a first notation type and a second notation type and linking said components of the first notation type to a corresponding notation of the second notation type. The parsing unit is arranged to parse computer program source code to identify notations of the first type in said source code. The reasoning unit is arranged to communicate with the parsing unit and the data repository and is responsive upon identification of a notation of the first type by the parsing unit to construct a notation of the second type from one or more of said components in the data repository and insert said constructed notation in the computer program source code, the constructed notation corresponding to the identified notation of the first type.

Fig. 1

**Description**

Field of the Invention

The present invention relates to a notation enhancement system, compiler and method which are particularly applicable to automatic discovery of software defects.

Background to the Invention

Computer programs are, by their very nature, complex. It is not unusual for a project to be divided between a team of programmers. Similarly, a project (either in mid development or after completion for support purposes) may be passed from one programmer or team to another.

While it is desirable for a computer program to be documented separately to the source code from which the computer program executable is compiled or interpreted, it is not at all unusual for the documentation to be sparse or non-existent. For example, in the maintenance of legacy codebases, original development teams may no longer be contactable.

One problem with documentation is that it is often created after the act of writing the source code and is typically separated from the source code and not easily referred to. In an effort to introduce a limited level of documentation into source code, various notation schemes have been developed.

A notation scheme allows the end user to communicate information about the source code which cannot be (or cannot easily be) communicated in the source language alone. The information is typically conveyed in comments included within the source code for other developers to read but generally not to be compiled or executed.

The existence, format, style, location and level of detail of the documentation/comments provided for source code is dependent on the style and training of the programmer. Documentation and comments are not typically machine-readable and even if they were, they are not guaranteed to be understood by a machine.

These are problems faced by all developers. Even the best trained and most devoted developer will often be unable to devote the time to documentation than perhaps is needed. Many developers see documentation as a necessary evil that takes time away from the more enjoyable jobs and therefore attempt to complete it as quickly as possible. A recent surge in the use of Agile development schedules has also meant that documentation has suffered as a consequence.

While there exist systems that attempt to automatically document or comment source code, these are often functionally limited and/or do not produce useful information for the developer.

Development tools such as static analysis tools attempt to assist in computer program development or maintenance and can fill-in where documentation is lacking. However, the ability of static analysis to reason about computer program code is typically limited to certain scenarios/problem areas. Errors, particularly run-time errors caused by invalid pointer use and the like cannot normally be detected by static analysis and require much more effort to debug.

While static analysis tools may be able to infer much more about source code than a skilled programmer in a similar amount of time, the tools generally cannot take into account the contents of comments and the intention/expectation of a programmer regarding how he or she expects the program to operate, the inputs it will receive etc.

Statement of the Invention

According to an aspect of the present invention, there is provided a notation enhancement system comprising a parsing unit, a reasoning unit and a data repository, wherein:

the data repository is arranged to store data on at least components of notations of a first notation type and a second notation type and linking said components of the first notation type to a corresponding notation of the second notation type;

the parsing unit is arranged to parse computer program source code to identify notations of the first type in said source code; and,

the reasoning unit is arranged to communicate with the parsing unit and the data repository and is responsive upon identification of a notation of the first type by the parsing unit to construct a notation of the second type from one or more of said components in the data repository and insert said constructed notation in the computer program source code, the constructed notation corresponding to the identified notation of the first type.

The first notation type may comprise an assertion. The second notation type may comprise an annotation.

The second notation type may, for example, comprise an assertion formatted as an annotation or an assertion embedded within an annotation.

The system may be arranged to interface with a static analysis system, the reasoning unit being arranged to communicate at least one of the notation of the first type and the notation of the second type via the interface to the static analysis system. The interface may include an abstract syntax tree, the reasoning unit being arranged to encode at least one of the notation of the first type and the notation of the second type in the abstract syntax tree.

The system may be arranged to interface with a compiler and is operative upon detection of compilation of the source code by the compiler to trigger operation of the parsing unit and the reasoning unit on the source code.

Upon detection of compilation of a library file and an application programming interface file by the compiler, the system may be arranged to direct the reasoning unit to insert the constructed notation of the second type in the application programming interface file.

The system may be arranged to automatically generate a notation of a second type for each notation of the first type in the source code.

The notation of the first type may comprise an annotation and the notation of the second type comprises an assertion.

According to another aspect of the present invention, there is provided a method of enhancing notation in computer program code comprising:

storing data on at least components of notations of a first notation type and a second notation type and linking said components of the first notation type to a corresponding notation of the second notation type;
parsing computer program code to identify notations of the first type in said code; and, upon identification of a notation of the first type constructing a notation of the second type from one or more of said components and inserting said constructed notation in the computer program code, the constructed notation corresponding to the identified notation of the first type.

The step of constructing may comprise formatting the notation of the first type as a notation of the second type.

The step of constructing may comprise embedding the notation of the first type within a notation of the second type.

The method may further comprise compiling a library file and an application programming interface file, wherein the step of inserting includes inserting the constructed notation of the second type in the application programming interface file.

Embodiments of the present invention may, for example, be implemented as computer programs, firmware, hardware, software, as plug-ins or as stand-alone components, as a library accessible from other systems or possibly as a compiler or program development system.

Embodiments of the present invention seek to provide a notation enhancement system, method and compiler in which notation in source code is automatically enhanced in a manner that enables static and dynamic analysis tools to take information from the notation into account and greatly increase the types of issues that can be identified or addressed by such analysis.

Preferred embodiments of the present invention seek to connect program annotations with "assert" functionality. In particular, embodiments seek to leverage existing notation types that are supported by most programming languages and systems but extends their usage so that assert type notations can be introduced where they were previously not supported or expected. This provides a widely applicable annotation capability in a form that is already familiar to developers whilst also supporting dynamic checking, which is typically lacking from annotation based systems.

Embodiments of the present invention furthermore seek to provide a method and system for describing properties of the source code in a way that is both human readable and machine readable. The machine readable aspect allows compilers or other analysis tools to reason about the code and produce additional warnings or errors that would not have been possible without the annotations.

In preferred embodiments, assert statements are embedded within annotations. This has many advantages including:

• Although presented as an annotation, an assert statement can be used in its normal way which can bring additional benefits. The meaning of the assert statement can be interpreted to allow a static analysis engine to perform more reasoning on the code than would be possible without treating the assert statements as annotations;
• Assert style statements can be added in places where asserts would not normally occur. One example of this is in interfaces. Most programming languages allow the separation of the specification of the interface of a function or class from its definition. Conventional assert statements can occur only in the definition part of a function. Using the embodiments of the present invention, a developer could specify assert statements as part of the interface. This has various advantages, including the separation of interface issues from implementation issues, and improved readability for consumers of the interface in question;
• Assert language features used in a programming language could be used in enhanced ways which allow properties to be asserted which would typically be specified in annotation, but which are not possible to specify using ordinary assert statements. For example it would allow the user to specify whether or not an input parameter should have been defined; automatic conversion between interface level and definition level assertions is used to ensure they stay consistent and remain testable dynamically;

• All assertions can be used in their ordinary form at run-time, allowing dynamic checking of code. This strengthens computer programs produced using embodiments of the present invention since dynamic testing can cover complicated algorithmic issues which cannot be resolved statically due to the computation necessary.

Particular advantages provided by embodiments of the present invention include:

- static and dynamic fault finding can be performed in a very straightforward manner;
- notation consistency can be monitored;
- existing language features are leveraged giving maximum compatibility with existing source code;
- no specially formatted comments are needed meaning that readability of the source code is unaffected;
- no changes to language syntax, therefore no compatibility issues with other systems;
- assert statements become visible as part of interface so that callers can see them, even if they don't have access to the implementation details (as is the case when a third-party library is used)
- existing technology that end users are already familiar with is used, reducing the uptake barrier;
- existing code bases which already include assert statements can be accommodated-retro fitting to existing code bases is therefore very cost efficient for the end user.

One of the benefits of embodiments of the present invention is that additional defect detection can take place, beyond that possible with ordinary compilation or static analysis techniques.

Brief Description of the Drawings

Embodiments of the present invention will now be described in detail, by way of example only, with reference to the accompanying drawings in which:

Figure 1 is a schematic diagram of a system according to an embodiment of the present invention;
Figure 2 is a schematic diagram of a system according to another embodiment of the present invention; and,
Figure 3 is a schematic diagram of a compiler according to an embodiment of the present invention.

Detailed Description

As discussed above, there are many standardised notation types in use in computer program code. In addition to comments, information may be conveyed using other types of notation such as assertions and annotations. Preferred embodiments of the present invention utilise both assertion and annotations, although it will be appreciated that other notation types could be substituted.

An assertion is a machine readable and executable statement containing a boolean expression that a programmer believes should be true at the time the statement is to be executed. Assertions are used during development as a sort of sanity check, and typically are disabled when an application is deployed.

Assertions are used to help specify programs and to reason about program correctness. Several modern programming languages include checked assertions. These are statements that are checked at runtime or sometimes under static testing. If an assertion evaluates to false at run-time, an "assertion failure" results, which typically causes execution to abort. This draws attention to the location at which the logical inconsistency is detected and can be preferable to the behaviour that would otherwise result.

An assertion (often called an "assert statement") may be used to verify that an assumption made by the programmer during the implementation of the program remains valid when the program is executed. A major advantage of this technique is that when an error does occur it is detected immediately and directly, rather than later through its often obscure side-effects. Since an assertion failure usually reports the code location, one can often pinpoint the error without further debugging.

Assertions document logically impossible situations and help in discovering programming errors. If the "impossible" occurs, then something fundamental is clearly wrong.

An annotation on the other hand provides data about a program. An annotation has no direct effect on the operation of the code it annotates, indeed an annotation often tells the programmer, testing system or compiler nothing about the code. Annotations are typically used to provide extra information in a form which is typically both human and machine readable. One example use of annotations is in Java where annotations are often used to provide information on additional properties of classes methods and fields. The expected use of annotations is to supply additional data about how the code is to be compiled, deployed or executed.

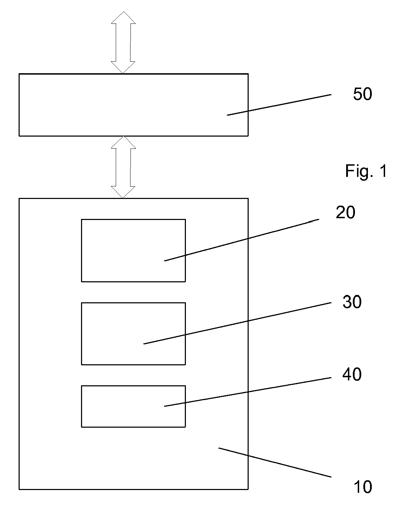

Figure 1 is a schematic diagram of a notation enhancement system according to an embodiment of the present invention.

The system 10 includes a parsing unit 20, a reasoning unit 30 and a data repository 40. The system 10 is arranged to communicate with an interface component 50.

Source code is received by the system 10 via the interface component 50. The parsing unit processes the source code and reports each assert statement it finds to the reasoning unit 30.

The reasoning unit 30 identifies assert statements which can be converted by cross-referencing with the data repository 40. The reasoning unit converts the identified assert statements into annotations and places them in an appropriate place in the source code.

For example, source code may include the following assertion:

*Assert (o != null)*

Upon encountering this assertion, the parsing unit 20 passes it to the reasoning unit 30 which in turn matches the "!= null" component of the statement in the data repository 40. This component is identified as the "not null" assertion which is linked in the repository to the "non null" annotation having the form:

*@non_null*

Having identified the corresponding component, the reasoning unit identifies that the function f in the source code passes o as an argument and therefore changes the function definition from:

*f(obj o)*

to

*f(@non_null obj o)*

The reasoning unit 30 and parsing unit 40 work their way through all the source code until all assert statements have been identified and supplemented where possible with corresponding annotations. As discussed below, the annotations can be located elsewhere (such as in an API) and need not be in the same file/location as the assertions. It will also be appreciated from the example above that a single assertion could result in multiple instances of an annotation being introduced (in the above example one for each reference to object o).

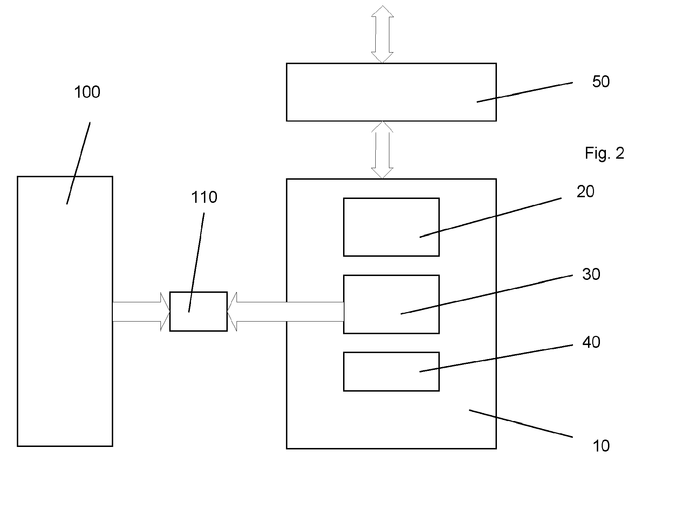

Figure 2 is a schematic diagram of an enhanced static analysis system according to an embodiment of the present invention.

In this embodiment, the system 10 of Figure 1 is interfaced with a static analysis engine 100. Preferably, the system 10 may operate as a plug-in to the static analysis engine 100 or to a compiler incorporating or interfacing with the static analysis engine 100.

Processing of source code proceeds as discussed above with reference to Figure 1. However, the reasoning unit 30 informs the static analysis engine 100 of the generated annotations by encoding them in an enhanced abstract syntax tree 110 (although it will be appreciated that this is not the only approach possible for conveying the information). During static analysis, the static analysis engine 100 references the enhanced syntax tree 110.

In the example given above, conventional static analysis systems would not necessarily know that object o must never be null. However, due to the encoding of the enhanced syntax tree 110, static analysis using an embodiment of the present invention has this information immediately available and the values of o can be checked during static analysis to ensure that they are never null.

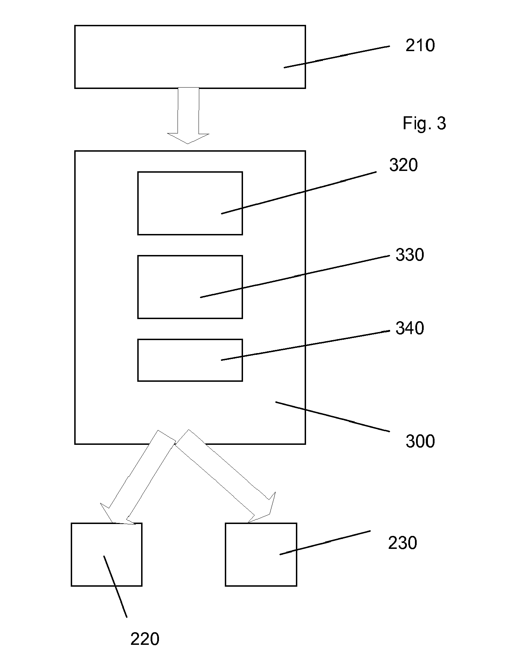

Figure 3 is a schematic diagram of a compiler according to an embodiment of the present invention.

In this embodiment, source code 210 is received by the complier 300 to be compiled into executable code 220 and an associated application program interface (API) 230. This is the form in which libraries and other functional code are often distributed. The API 230 documents accessible functions and their parameters whilst the executable code 220 contains the functions themselves.

The compiler 300 includes a parsing unit 320, a reasoning unit 330 and a data repository 340. Optionally, these components could be in the form of a plug-in system for the compiler 300.

During compilation, the compiler 300 calls the parsing unit 320 to enhance notations within an API being generated from source code. The parsing unit 320 processes the source code and reports each assert statement it finds to the reasoning unit 330 along with the function to which the assert statement relates.

The reasoning unit 330 identifies assert statements which can be converted by cross-referencing with the data repository 340. The reasoning unit 330 converts the identified assert statements into annotations and places them alongside the definition for the respective function in the API 230.

In this manner, any assert statements are included within the API 230 as annotations. Not only is this information highly valuable to someone trying to use the API 230 and executable code 220, the presence of the annotations mean that the API 230 and executable code 220 can be statically analysed in a manner that takes into account the assertions - something that would not be possible if a standard API and executable code were distributed.

For example, the following may appear in the source code:

```
public double calculate_pretax(double cost, double tax_rate)
assert tax_rate > 0;
return cost / tax_rate;
}
```

The function calculate_pretax returns a cost of an item exclusive of sales tax (taxed at rate tax_rate). The assert statement ensures that tax_rate is greater than zero to avoid divide by zero errors and the like.

On identifying this assert statement, the parsing unit 320 passes it to the reasoning unit 330 which decomposes the assert statement and rebuilds it as an annotation. For example, an @assert annotation could be built defining the components of the represented assert statement as values of the annotation. As a result, the entry in the API for calculate_pretax may be:

```
@assert(
variable = tax_rate
operator ='>'
value = 0)
public double calculate_pretax(double cost, double tax_rate)
```

In an optional refinement of the above described embodiments, properties could be asserted which are not possible to specify using ordinary assert statements. For example it can be specified whether or not an input parameter should have been defined.

Although conversion from assert statements to annotations have been discussed, it will be appreciated that the reverse is also possible with the system or compiler taking source code with annotations and generating relevant assert statements.

For example, when the parsing unit 20 identifies an annotation in a header file for myFunc as shown below:

```
void myFunc (_IN _NON_NULL char *str);
```

The reasoning unit 30 cross references the identified annotation (_IN_NON_NULL) in the data repository 40 and introduces an assert statement into the code. While this could be done by inserting the assert statement directly into the function, it may alternatively be done by generating a new function, myFuncWithAssert, which includes the assert statement and a call to the existing function as follows:

```
void myFuncWithAssert (char *str)
{
 assert (str != null);
 myFunc (str);
}
```

The new function is then substituted for all references of myFunc. In this manner, the placement of the assert statement can be controlled. The user may not require access to the generated code and in certain embodiments this may be hidden from the user.

For example, a source code file may include annotations such as IN _NON_NULL. In selected embodiments of the present invention, these are transformed into assert statements and the source code file with assert statements is directly passed to the compiler to be compiled in the normal manner. In such an arrangement, whilst it is advantageous to produce the assert statements, they do not need to be accessible or visible to the user and the augmented source code can be compiled directly without user interaction.

In preferred embodiments of the present invention, correspondency between assert and annotation statements can be checked at compilation time (or static analysis) to ensure that each assert statement has a corresponding annotation present and optionally vice-versa.

**Claims**

1.  A notation enhancement system comprising a parsing unit, a reasoning unit and a data repository, wherein:

    the data repository is arranged to store data on at least components of notations of a first notation type and a second notation type and linking said components of the first notation type to a corresponding notation of the second notation type;
    the parsing unit is arranged to parse computer program source code to identify notations of the first type in said source code; and,
    the reasoning unit is arranged to communicate with the parsing unit and the data repository and is responsive upon identification of a notation of the first type by the parsing unit to construct a notation of the second type from one or more of said components in the data repository and insert said constructed notation in the computer program source code, the constructed notation corresponding to the identified notation of the first type.

2.  A notation enhancement system according to claim 1, wherein the first notation type comprises an assertion.

3.  A notation enhancement system according to claim 2, wherein the second notation type comprises an annotation.

4.  A notation enhancement system according to claim 3, wherein the second notation type comprises an assertion formatted as an annotation.

5.  A notation enhancement system according to claim 3, wherein the second notation type comprises an assertion embedded within an annotation.

6.  A notation enhancement system according to any preceding claim, wherein the system is arranged to interface with a static analysis system, the reasoning unit being arranged to communicate at least one of the notation of the first type and the notation of the second type via the interface to the static analysis system.

7.  A notation enhancement system according to claim 6, wherein the interface includes an abstract syntax tree, the reasoning unit being arranged to encode at least one of the notation of the first type and the notation of the second type in the abstract syntax tree.

8.  A notation enhancement system according to any preceding claim, wherein the system is arranged to interface with a compiler and is operative upon detection of compilation of the source code by the compiler to trigger operation of the parsing unit and the reasoning unit on the source code.

9.  A notation enhancement system according to claim 8, wherein upon detection of compilation of a library file and an application programming interface file by the compiler, the system is arranged to direct the reasoning unit to insert the constructed notation of the second type in the application programming interface file.

10. A notation enhancement system according to any preceding claim, wherein the system is arranged to automatically generate a notation of a second type for each notation of the first type in the source code.

11. A notation enhancement system according to claim 1, wherein the notation of the first type comprises an annotation and the notation of the second type comprises an assertion.

12. A method of enhancing notation in computer program code comprising:

storing data on at least components of notations of a first notation type and a second notation type and linking said components of the first notation type to a corresponding notation of the second notation type; parsing computer program code to identify notations of the first type in said code; and, upon identification of a notation of the first type constructing a notation of the second type from one or more of said components and inserting said constructed notation in the computer program code, the constructed notation corresponding to the identified notation of the first type.

13. A method according to claim 12, wherein the step of constructing comprises formatting the notation of the first type as a notation of the second type.

14. A method according to claim 12, wherein the step of constructing comprises embedding the notation of the first type within a notation of the second type.

15. A method according to any of claims 12 to 14, further comprising compiling a library file and an application programming interface file, wherein the step of inserting includes inserting the constructed notation of the second type in the application programming interface file.

50

Fig. 1

20

30

40

10

Fig. 2

210

Fig. 3

320

330

340

300

230

220

Europäisches
Patentamt

European
Patent Office

Office européen
des brevets

# EUROPEAN SEARCH REPORT

**Application Number**

EP 09 27 5097

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 827 088 A (XEROX CORP [US]) 4 March 1998 (1998-03-04) * abstract * * page 2, lines 23-46 * ----- | 1-15 | INV. G06F9/44 |

TECHNICAL FIELDS
SEARCHED (IPC)

G06F

The present search report has been drawn up for all claims

| Place of search | Date of completion of the search | Examiner |
|---|---|---|
| The Hague | 24 February 2010 | de Man, Ronald |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                               
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 09 27 5097

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2010

| Patent document cited in search report | | Publication date | Patent family member(s) | | Publication date |
|---|---|---|---|---|---|
| EP 0827088 | A | 04-03-1998 | GB | 2314433 A | 24-12-1997 |
| | | | JP | 10091630 A | 10-04-1998 |
| | | | US | 6023760 A | 08-02-2000 |

EPO FORM P0459